# DEMANDE DE BREVET EUROPEEN

(11) **EP 2 995 514 A1**
(43) Date de publication de la demande: **16.03.2016**
(21) Numéro de dépôt: 15177758.8
(22) Date de dépôt: 21.07.2015
(51) Int. Cl.: B60S 1/40

(54) **ORGANE POUR UN SYSTÈME DE CONNEXION D'UN BALAI À UN BRAS D'ESSUIE-GLACE**

(30) Priorité: 15.09.2014 FR 1458648
(71) Demandeur: Valeo Systèmes d'Essuyage, 78321 Le Mesnil Saint Denis (FR)
(72) Inventeur: TERRASSE, William, 63270 VIC LE COMTE (FR); MOULEYRE, Guillaume, 63122 Saint Genès Champanelle (FR)
(74) Mandataire: Callu Danseux, Violaine

(57) **Abrégé**

Premier organe (30, 130) pour un système de connexion d'un balai (12, 112) à un bras (14, 114) d'essuie-glace, ce premier organe étant configuré pour être solidarisé audit balai ou audit bras et comportant des moyens d'articulation (32, 132) configurés pour coopérer avec des moyens complémentaires (34, 134) d'un second organe (26, 126) du système de connexion, pour définir un axe (Y) d'articulation du premier organe vis-à-vis de ce second organe, qui est un axe d'articulation dudit balai vis-à-vis dudit bras, ledit premier organe (30, 130), le premier organe comprenant des premiers moyens (36a, 36b, 136a, 136b) de butée qui sont configurés pour coopérer avec ledit second organe pour retenir ledit premier organe vis-à-vis dudit second organe en translation le long dudit axe d'articulation, dans un premier sens, et des seconds moyens (38a, 136a, 136b) de butée qui sont configurés pour coopérer avec ledit second organe pour retenir le premier organe vis-à-vis dudit second organe en translation le long dudit axe d'articulation, dans un second sens inverse du premier sens.

## Description

### DOMAINE TECHNIQUE

La présente invention concerne notamment un organe pour un système de connexion d'un balai à un bras d'essuie-glace, cet organe étant par exemple un connecteur ou un adaptateur.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai et qui est en général sertie directement sur la lame racleuse ou sur le *flat blade,* alors que l'adaptateur est solidaire du bras. L'adaptateur est une pièce intermédiaire qui permet la liaison et la fixation du connecteur sur le bras d'entraînement. Il est en général configuré pour être engagé dans une tête ou pièce terminale en forme de chape du bras d'entraînement.

Chacun de ces organes (connecteur et adaptateur) comprend des moyens d'articulation configurés pour coopérer avec des moyens complémentaires de l'autre organe, pour définir au moins un axe transversal d'articulation des organes, qui est un axe d'articulation du balai vis-à-vis du bras. Dans la technique actuelle, l'un des organes, tels que le connecteur, comprend un axe physique sensiblement cylindrique qui définit l'axe d'articulation et qui est reçu dans un logement de forme complémentaire de l'autre organe. L'axe physique comprend en général un pion ou des tourillons cylindrique(s) engagé(s) dans le logement par encliquetage élastique.

L'invention propose un perfectionnement à cette technologie qui est simple, efficace et économique.

### EXPOSE DE L'INVENTION

L'invention propose à cet effet un premier organe pour un système de connexion d'un balai à un bras d'essuie-glace, ce premier organe étant configuré pour être solidarisé audit balai ou audit bras et comportant des moyens d'articulation configurés pour coopérer avec des moyens complémentaires d'un second organe du système de connexion, pour définir un axe (Y) d'articulation du premier organe vis-à-vis de ce second organe, qui est un axe d'articulation dudit balai vis-à-vis dudit bras, ledit premier organe étant caractérisé en ce qu'il comprend des premiers moyens de butée qui sont configurés pour coopérer avec ledit second organe pour retenir ledit premier organe vis-à-vis dudit second organe en translation le long dudit axe d'articulation, dans un premier sens, et des seconds moyens de butée qui sont configurés pour coopérer avec ledit second organe pour retenir le premier organe vis-à-vis dudit second organe en translation le long dudit axe d'articulation, dans un second sens inverse du premier sens.

Par « axe d'articulation du balai vis-à-vis du bras », on entend un axe qui assure le pivotement du balai par rapport au bras lors du balayage normal d'une vitre courbe. En d'autres termes, cet axe autorise la rotation relative du balai par rapport au bras, dans un plan perpendiculaire au pare-brise passant par le bras.

Le premier organe selon l'invention peut comprendre une ou plusieurs des caractéristiques suivantes, prises isolément ou en combinaison les unes avec les autres :
- lesdits moyens d'articulation sont configurés pour être montés sur ou dans lesdits moyens complémentaires par translation axiale le long dudit axe d'articulation ;
- le premier organe est un adaptateur configuré pour être solidarisé audit bras ou un connecteur configuré pour être solidarisé audit balai ;
- un plan sensiblement parallèle audit axe d'articulation passe par lesdits moyens d'articulation et par lesdits premiers et seconds moyens de butée ;
- ledit premier organe a une forme allongée et en ce que ledit plan est sensiblement parallèle à un axe d'allongement dudit premier organe ;
- lesdits moyens d'articulation comprennent un pion cylindrique ;
- lesdits moyens d'articulation sont situés à une extrémité inférieure dudit premier organe ;
- lesdits moyens d'articulation sont reliés au reste du premier organe par un voile de matière s'étendant le long dudit axe d'articulation ;
- le premier organe est formé d'une seule pièce ;
- lesdits premiers et/ou seconds moyens de butée font saillie dudit premier organe ;
- lesdits premiers et/ou seconds moyens de butée font saillie desdits moyens d'articulation ;
- les premiers et/ou seconds moyens de butée comprennent au moins une ailette faisant saillie desdits moyens d'articulation, ladite au moins une ailette s'étendant le long de l'axe d'articulation ;
- lesdits premiers et seconds moyens de butée sont à distance desdits moyens d'articulation, et font par exemple saillie des parois latérales du premier organe ;
- le premier organe comprend une première paroi latérale qui comprend lesdits premiers moyens de butée faisant saillie, par exemple au nombre de un ou deux, et une seconde paroi latérale qui comprend lesdits seconds moyens de butée faisant saillie, par exemple au nombre de un ou deux ;

La présente invention concerne également un système de connexion d'un balai à un bras d'essuie-glace, ce système comportant deux organes dont un est configuré pour être solidarisé audit balai et l'autre est configuré pour être solidarisé audit bras, caractérisé en ce qu'un premier des organes est tel que défini ci-dessus, et un second des organes comporte des moyens configurés pour coopérer avec lesdits premiers et seconds moyens de butée, par exemple par coopération de formes.

Avantageusement, le premier organe est un adaptateur configuré pour être solidarisé audit bras et ledit second organe est un connecteur configuré pour être solidarisé audit balai.

La présente invention concerne encore un balai d'essuie-glace, caractérisé en ce qu'il comprend un premier organe ou un système tel que décrit ci-dessus.

L'invention permet notamment d'avoir un balai universel par longueur et de pouvoir y associer l'adaptateur et/ou le connecteur de son choix.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique partielle en perspective d'un essuie-glace selon l'invention, cet essuie-glace comportant un balai d'essuie-glace, un bras d'entraînement du balai, et un système de connexion du balai au bras,
- la figure 2 est une vue schématique en perspective éclatée et à plus grande échelle du système de connexion de l'essuie-glace de la figure 1,
- la figure 3 est une vue schématique en perspective de l'adaptateur du système de connexion de l'essuie-glace de la figure 1,
- la figure 4 est une vue schématique en perspective du connecteur du système de connexion de l'essuie-glace de la figure 1,
- les figures 5 à 8 sont des vues schématiques en perspective du système de connexion de l'essuie-glace de la figure 1, et représentent des étapes de montage de ce système de connexion,
- la figure 9 est une vue schématique partielle en perspective d'une variante de réalisation d'un système selon l'invention de connexion d'un balai à un bras d'essuie-glace,
- la figure 10 est une vue schématique en perspective éclatée et à plus grande échelle du système de connexion de la figure 9,
- la figure 11 est une vue schématique en perspective du connecteur du système de connexion de la figure 9,
- la figure 12 est une vue schématique de dessous du connecteur du système de connexion de la figure 9,
- la figure 13 est autre une vue schématique en perspective du connecteur du système de connexion de la figure 9,
- la figure 14 est une vue schématique en perspective de l'adaptateur du système de connexion la figure 9, et
- les figures 15 à 18 sont des vues schématiques en perspective du système de connexion de la figure 9, et représentent des étapes de montage de ce système de connexion.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure ou intérieure s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

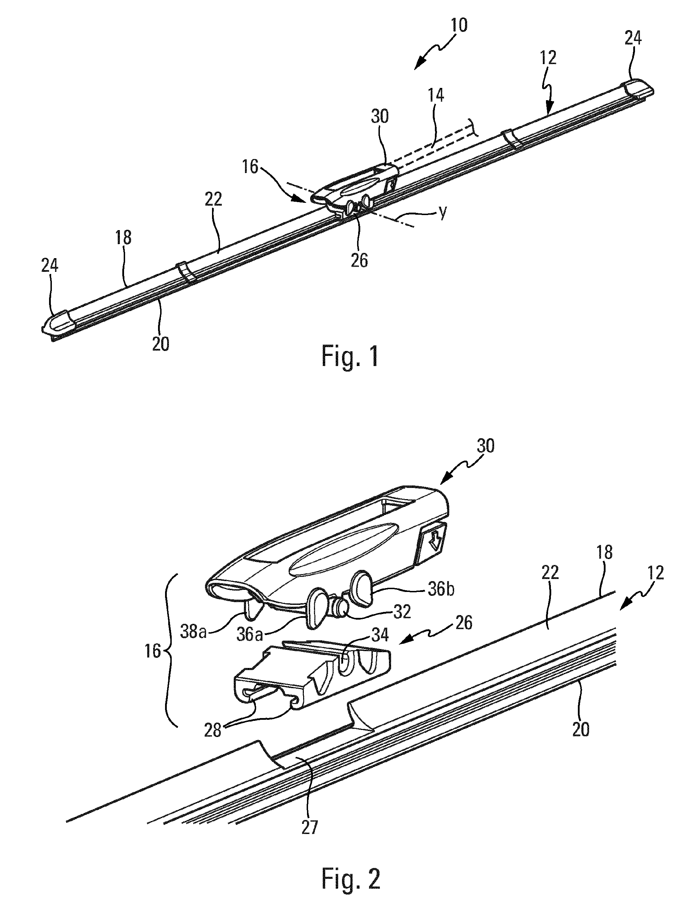

On se réfère d'abord aux figures 1 à 8 qui représentent un premier mode de réalisation de l'invention.

La figure 1 représente un essuie-glace 10 dans son ensemble, cet essuie-glace 10 comportant un balai 12, un bras 14 (schématiquement représenté par des traits pointillés) d'entraînement du balai 12, et un système 16 de connexion du balai 12 au bras 14.

Le bras 14 est ici un bras « tige » bien connu de l'homme du métier et qui ne sera donc pas décrit dans le détail dans ce qui suit. Tout autre type de bras peut naturellement être utilisé dans le cadre de la présente invention. Le bras 14 est destiné à être entraîné par un moteur pour suivre un mouvement angulaire de va-et-vient permettant d'évacuer l'eau et éventuellement d'autres éléments indésirables recouvrant le pare-brise.

Le balai 12 est de préférence du type *flat blade* et comprend un corps longitudinal 18, une lame d'essuyage 20, en général en caoutchouc, et au moins une vertèbre qui rigidifie la lame 20 et favorise son application sur le pare-brise.

Le corps 18 du balai 12 peut comporter un déflecteur aérodynamique 22 supérieur destiné à améliorer le fonctionnement de l'essuie-glace, le but de ce déflecteur 22 étant d'améliorer le plaquage du balai sur le pare-brise et donc la performance aérodynamique de l'essuie-glace.

Le balai 12 comprend en outre des embouts 24 ou agrafes d'accrochage de la lame 20 et de la vertèbre sur le corps 18, ces embouts 24 étant situées à chacune des extrémités longitudinales du corps 18.

Le corps 18 du balai peut être réalisé en deux parties qui sont disposées sensiblement bout à bout et raccordées l'une à l'autre par un connecteur 26 intermédiaire qui fait partie du système de connexion 16. Ces parties peuvent être indépendantes l'une de l'autre ou liées ensemble par une partie médiane du corps, définie par une découpe médiane partielle 27 du corps, comme cela est visible en figure 2.

Le connecteur 26 est intercalé entre les deux parties du corps 18 et peut comprendre des moyens de liaison à ces parties. Le connecteur 26 peut comprendre des moyens de fixation sur la ou les vertèbres. Il peut ainsi comprendre des griffes inférieures 28 définissant des rainures longitudinales de réception, en général par coulissement, de parties d'extrémité longitudinale de la ou des vertèbres, comme cela est visible en figure 2. Le connecteur 26 est donc configuré pour être solidarisé au balai 12.

Le système de connexion 16 comprend en outre un adaptateur 30 qui est configuré pour être solidarisé au bras 14 et qui est monté sur le connecteur 26 de façon à garder au moins un degré de liberté en pivotement autour d'un axe d'articulation Y qui est un axe transversal sensiblement perpendiculaire à l'axe longitudinal du balai 12 (figure 1). Ce degré de liberté autorise un pivotement du balai 12 vis-à-vis du bras 14 et permet ainsi au balai de suivre la courbure du pare-brise lors de ses déplacements.

Ce degré de liberté est obtenu grâce à des moyens d'articulation de l'adaptateur 30 qui sont configurés pour coopérer avec des moyens complémentaires du connecteur 26, et inversement, pour définir ledit axe d'articulation Y.

Dans l'exemple représenté, les moyens d'articulation comprennent un pion cylindrique 32 qui est porté par l'adaptateur 30 et qui est engagé dans un logement cylindrique 34 du connecteur 26. Le pion cylindrique 32 s'étend dans une direction transversale et définit l'axe Y. Selon une caractéristique de l'invention, le pion 32 est engagé dans le logement 34 par translation le long de l'axe Y, comme cela sera décrit plus en détail dans ce qui suit.

Selon une autre caractéristique de l'invention, les moyens d'articulation sont associés à des moyens de butée qui limitent voire empêchent des déplacements de l'adaptateur 30 vis-à-vis du connecteur 26, le long de l'axe Y, après leur montage.

Dans l'exemple représenté, c'est l'adaptateur 30 qui porte ces moyens de butée, qui comprennent des premiers moyens 36a, 36b en saillie de butée qui sont configurés pour coopérer avec le connecteur pour retenir l'adaptateur vis-à-vis du connecteur 26 en translation le long de l'axe Y, dans un premier sens, et des seconds moyens 38a en saillie de butée qui sont configurés pour coopérer avec le connecteur pour retenir l'adaptateur vis-à-vis du connecteur en translation le long de l'axe Y, dans un second sens inverse du premier sens.

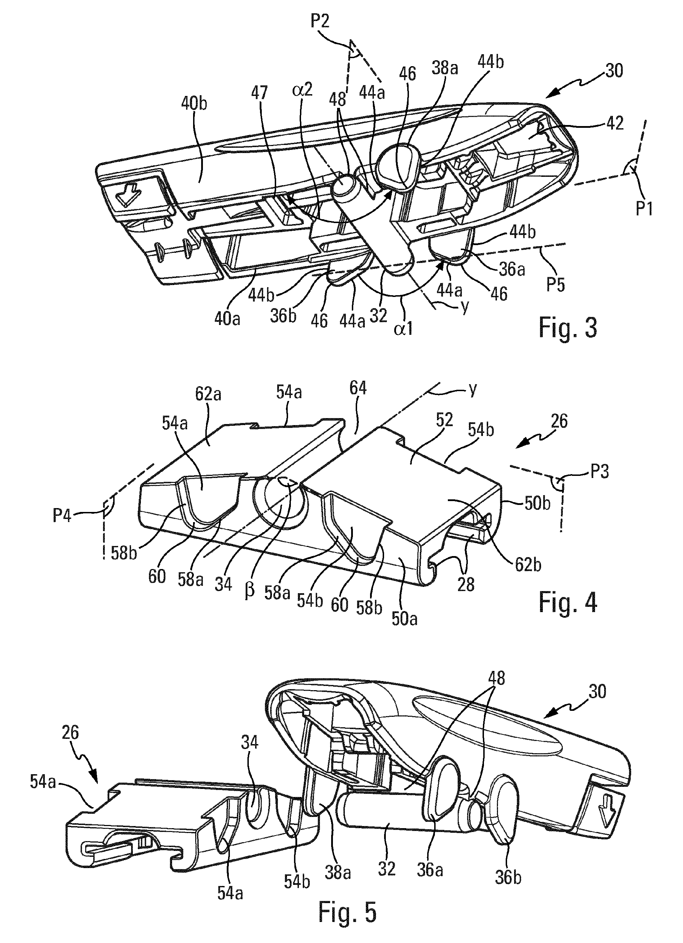

Comme cela est mieux visible en figure 3, l'adaptateur 30 a une forme générale allongée dans la direction longitudinale du balai 12. Il comprend deux parois latérales 40a, 40b sensiblement parallèles et à distance l'une de l'autre. Ces parois 40a, 40b sont reliées entre elles à leurs extrémités supérieures par une paroi transversale 42 sensiblement perpendiculaire aux parois 40a, 40b. Les parois 40a, 40b, 42 ont ici une forme allongée en direction longitudinale.

Les parois 40a, 40b portent des jambes 36a, 36b, 38a qui forment les premiers et seconds moyens de butée précités. La paroi 40a porte une paire de jambes 36a, 36b alors que la paroi 40b porte une seule jambe 38a. Les jambes sont donc ici au nombre de trois. Les jambes 36a et 38a sont positionnées de manière symétrique par rapport à un plan longitudinal médian P1 de l'adaptateur 30, et les jambes 36a et 36b sont positionnées de manière symétrique par rapport à un plan transversal médian P2 de l'adaptateur 30. De plus, les jambes 36a, 38a ont des formes symétriques par rapport au plan P1.

Les plans P1 et P2 se coupent au niveau de l'axe d'articulation Y. Le plan P1 est ici sensiblement parallèle aux parois 40a, 40b, et le plan P2 est ici sensiblement perpendiculaire à ces parois.

Les jambes 36a, 36b de la paroi 40a sont à distance longitudinale l'une de l'autre. Chaque paroi 40a, 40b comprend une jambe 36a, 38a avant ou extérieure et la paroi 40b comprend une jambe 36b arrière ou intérieure. Les jambes sont sensiblement planes. Les jambes 36a, 36b de la paroi 40a s'étendent sensiblement dans un plan longitudinal sensiblement parallèle à cette paroi. Les jambes s'étendent à distance de l'axe Y et du pion 32.

Les jambes 36a, 36b, 38a sont ici formées d'une seule pièce avec l'adaptateur 30.

Chaque jambe s'étend ici vers le bas depuis l'extrémité inférieure de l'adaptateur 30. Chaque jambe comprend un premier bord périphérique inférieur 44a situé du côté de l'axe Y et un second bord périphérique inférieur 44b situé du côté opposé à l'axe Y (figures 3 et 5). Ces bords 44a, 44b sont ici sensiblement rectilignes. Les bords 44a des jambes 36a, 36b s'évasent ou s'écartent ici l'un de l'autre vers le bas. Ces bords 44a forment entre eux un angle α1 d'une valeur prédéterminée, par exemple de l'ordre de 120° (figure 3). Les bords 44b sont sensiblement parallèles.

Comme on le voit en figure 3, du fait de l'absence de jambe arrière sur la paroi 40b, cette paroi 40b a son bord périphérique inférieur 47 qui est libre. On note α2 l'angle entre ce bord périphérique 47 et le bord 44a de la jambe 38a de la paroi 40b, mesuré autour de l'axe Y (dans le plan de la paroi 40b). Cet angle α2 a une valeur prédéterminée, par exemple de l'ordre de 150°.

Chaque jambe 36a, 36b, 38a comprend à son extrémité libre inférieure un bord périphérique 46 incurvé convexe qui relie entre elles les extrémités inférieures des bords 44a, 44b.

Le pion 32 s'étend sensiblement à mi-distance de plans transversaux parallèles à l'axe Y et passant respectivement par les jambes 36a, 38a, et la jambe 36b.

Le pion 32 est formé d'une seule pièce avec l'adaptateur 30 et est relié à celui-ci par un voile de matière 48 qui s'étend le long de l'axe Y. Comme on le voit en figure 3, le pion 32 est situé à l'extrémité inférieure de l'adaptateur 30, le voile 48 s'étendant dans un plan transversal passant par l'axe Y.

Comme on le voit également en figure 3, les jambes 36a, 36b, 38a sont coupées par un plan longitudinal P5 parallèle à l'axe Y et passant par le pion cylindrique 32, par exemple au niveau de son axe Y.

Le connecteur 26, mieux visible à la figure 4, a une forme générale allongée dans la direction longitudinale du balai 12. Il comprend deux parois latérales 50a, 50b sensiblement parallèles et à distance l'une de l'autre. Ces parois 50a, 50b sont reliées entre elles à leurs extrémités supérieures par une paroi supérieure 52 sensiblement perpendiculaire aux parois 50a, 50b. Les extrémités inférieures des parois 50a, 50b portent ou forment les griffes 28 précitées. Les parois 50a, 50b, 52 ont ici une forme allongée en direction longitudinale.

Le connecteur 26 comprend des faces d'appui et/ou de butée des jambes 36a, 36b, 38a de l'adaptateur 30, qui ont ici notamment formées par les fonds d'empreintes 54a, 54b prévues sur le connecteur.

Les empreintes 54a, 54b sont formées dans les parois 50a, 50b, et en particulier sur leurs faces externes. Chaque paroi 50a, 50b comprend une paire d'empreintes 54a, 54b. Le connecteur 26 comprend ainsi deux paires d'empreintes, soit quatre empreintes. Les empreintes sont positionnées de manière symétrique par rapport à un plan longitudinal médian P3 du connecteur 26, ainsi que par rapport à un plan transversal médian P4 du connecteur. De plus, les empreintes 54a, 54b ont des formes symétriques par rapport au plan P3.

Les plans P3 et P4 se coupent au niveau de l'axe d'articulation Y (défini par le logement 34). Le plan P3 est ici sensiblement parallèle aux parois 50a, 50b, et le plan P4 est ici sensiblement perpendiculaire à ces parois. Les plans P1 et P3 sont confondus lorsque le connecteur 26 et l'adaptateur 30 sont montés l'un sur l'autre. Les plans P2 et P4 peuvent être confondus lorsque le connecteur 26 et l'adaptateur 30 sont montés l'un sur l'autre.

Les empreintes 54a, 54b sont à distance longitudinale les unes des autres. Chaque paroi 50a, 50b comprend une empreinte 54a avant ou extérieure et une empreinte 54b arrière ou intérieure. Les empreintes comportent des fonds sensiblement plats. Les empreintes 54a, 54b d'une même paroi 50a, 50b s'étendent sensiblement dans un plan longitudinal sensiblement parallèle à cette paroi.

Chaque empreinte comprend un premier bord périphérique inférieur 58a situé du côté du logement 34 et un second bord périphérique inférieur 58b situé du côté opposé au logement 34 (figure 4). Ces bords 58a, 58b sont ici sensiblement rectilignes. Les bords 58a des empreintes 54a, 54b s'évasent ou s'écartent ici l'un de l'autre vers le bas. Ces bords 58a forment entre eux un angle β d'une valeur prédéterminée, par exemple de l'ordre de 120°. Les bords 44b sont sensiblement parallèles.

Les empreintes 54a, 54b peuvent avoir des formes sensiblement complémentaires de celles des jambes 36a, 36b ,36a auxquelles elles sont associées.

Chaque empreinte 54a, 54b comprend à son extrémité libre inférieure un bord périphérique 60 incurvé concave qui relie entre elles les extrémités inférieures des bords 58a, 58b.

Le logement 34 s'étend sensiblement à mi-distance de plans transversaux parallèles à l'axe Y et passant respectivement par les empreintes 54a, et les empreintes 54b.

Le logement 34 est ici situé à l'extrémité supérieure du connecteur 26. La paroi transversale supérieure 52 du connecteur 26 est ici en forme de dièdre et comprend deux faces 62a, 62b planes inclinées, respectivement avant (ou extérieure) et arrière (ou intérieure). Le logement 34 s'étend à la zone de jonction des faces 62a, 62b et débouche au niveau de cette zone. Le logement comprend ainsi une ouverture longitudinale 64 qui s'étend au niveau de la zone de jonction des faces 62a, 62b, ou autrement dit au niveau de l'arête du dièdre.

Comme on le voit également en figure 4, les empreintes 54a, 54b sont coupées par un plan longitudinal P5 parallèle à l'axe Y et passant par le logement 34, par exemple au niveau de son axe longitudinal.

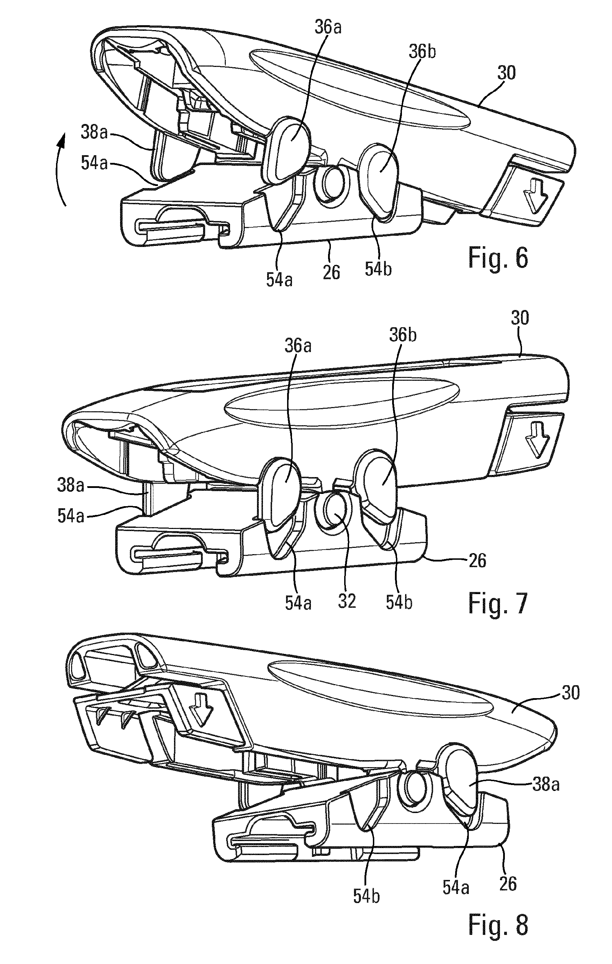

Les faces 62a, 62b forment entre elles un angle β d'une valeur prédéterminée, qui est par exemple de l'ordre de 210°. α1, α2 et β sont déterminées pour, d'une part, autoriser le montage du pion 32 dans le logement 34 par translation le long de l'axe Y et, d'autre part, assurer le blocage en translation du connecteur 26 et de l'adaptateur 30, lorsqu'ils sont en position de fonctionnement. Il faut que l'angle α2 soit supérieur ou égal à l'angle β pour autoriser cette translation, comme cela est visible en figure 6. Il faut par ailleurs que l'angle α1 soit inférieur à l'angle β pour assurer le blocage précité, comme cela est visible en figure 7.

Comme on le voit également dans les dessins, les empreintes 54a, 54b ont des profondeurs (ou dimensions transversales, le long de l'axe Y) similaires aux épaisseurs des jambes 36a, 38a, 36b.

Le connecteur 26 est formé d'une seule pièce.

Les figures 5 à 8 représentent des étapes de montage du système de connexion 16 selon l'invention. L'adaptateur 30 est solidarisé au bras 14 et le connecteur 26 est solidarisé au balai 12. Le balai 12 est disposé par rapport au bras 14 de façon à ce que le connecteur 26 soit disposé vis-à-vis de l'adaptateur 30 comme cela est représenté en figure 5. Dans cette position, les axes longitudinaux du pion 32 et du logement 34 sont alignés et les axes longitudinaux de l'adaptateur et du connecteur sont inclinés de façon à ce que le plan parallèle à l'axe Y et passant par les bords des jambes 36a, 36a passe sensiblement au niveau de la face 62a du connecteur ou légèrement au-dessus de celle-ci. Le plan parallèle à l'axe Y et passant par le bord de la jambe 36b passe alors sensiblement au niveau de la face 62b du connecteur ou légèrement au-dessus de celle-ci. Le connecteur est alors déplacé avec le balai en translation le long de l'axe Y jusqu'à ce que le pion 32 s'engage dans le logement 34 et que la jambe arrière 36b vienne en appui sur le fond de l'empreinte arrière 54b, comme cela est visible en figure 6. Les extrémités extérieures de l'adaptateur et du connecteur sont alors rapprochées l'une de l'autre par pivotement selon la flèche de la figure 6, de façon à ce que les jambes extérieures 36a, 36a viennent s'engager dans les empreintes extérieures 54a, 54b. On arrive alors à la position de fonctionnement de l'essuie-glace représenté aux figures 7 et 8, dans laquelle les jambes sont toutes engagées dans leurs empreintes respectives et peuvent coopérer par butée avec les fonds de ces dernières pour limiter voire empêcher des déplacements du connecteur vis-à-vis de l'adaptateur, et donc du balai vis-à-vis du connecteur, le long de l'axe Y. Le montage du système de connexion 16 est alors achevé, le connecteur 26 et le balai 12 pouvant pivoter vis-à-vis de l'adaptateur 30 et du bras 14, autour de l'axe Y. Lors de ce pivotement, les jambes coopèrent par glissement avec les fonds des empreintes pour guider les déplacements du connecteur vis-à-vis de l'adaptateur. L'opération de montage du système de connexion 16 se fait de préférence en orientant angulairement l'adaptateur 30 dans une position qui ne sera jamais rencontrée lors du fonctionnement du balai 12 sur le véhicule. L'assemblage où le désassemblage du connecteur 26 et de l'adaptateur 30 n'est ainsi pas possible en fonctionnement. On comprend par ailleurs, que le montage de l'adaptateur sur le connecteur peut se faire depuis n'importe quel côté du connecteur.

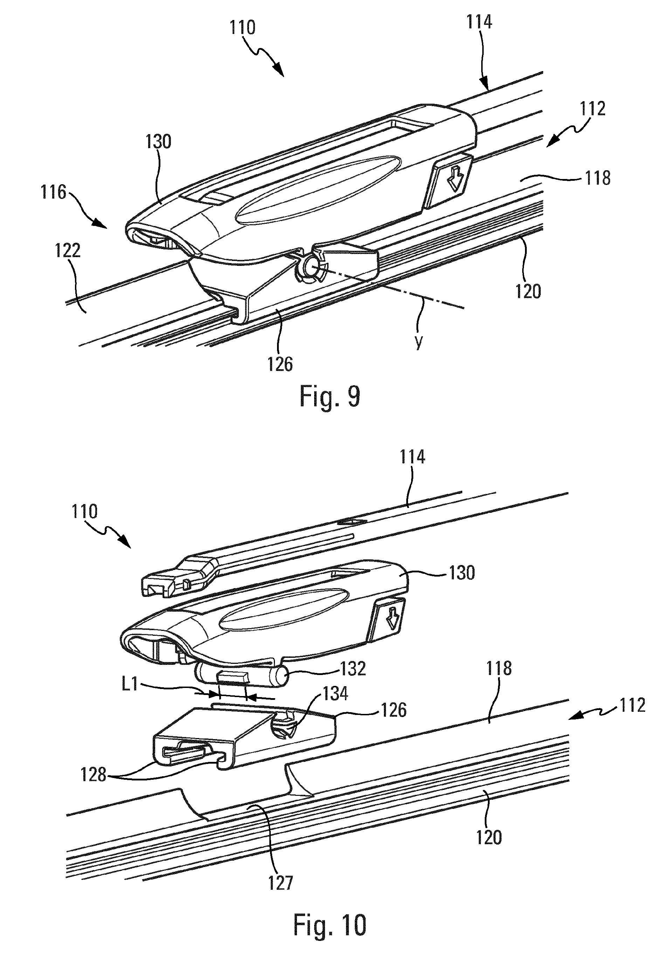

On se réfère maintenant aux figures 9 à 18 qui représentent une variante de réalisation de l'invention.

La figure 9 représente un essuie-glace 110 dans son ensemble, cet essuie-glace 110 comportant un balai 112, un bras 114 d'entraînement du balai 112, et un système 116 de connexion du balai 112 au bras 114.

Le bras 114 est ici un bras « tige » bien connu de l'homme du métier et qui ne sera donc pas décrit dans le détail dans ce qui suit. Tout autre type de bras peut naturellement être utilisé dans le cadre de la présente invention. Le bras 114 est destiné à être entraîné par un moteur pour suivre un mouvement angulaire de va-et-vient permettant d'évacuer l'eau et éventuellement d'autres éléments indésirables recouvrant le pare-brise.

Le balai 112 est de préférence du type *flat blade* et comprend un corps longitudinal 118, une lame d'essuyage 120, en général en caoutchouc, et au moins une vertèbre qui rigidifie la lame 120 et favorise son application sur le pare-brise.

Le corps 118 du balai 112 peut comporter un déflecteur aérodynamique 122 supérieur destiné à améliorer le fonctionnement de l'essuie-glace, le but de ce déflecteur 122 étant d'améliorer le plaquage du balai sur le pare-brise et donc la performance aérodynamique de l'essuie-glace.

Le balai 112 comprend en outre des embouts ou agrafes (non visibles) d'accrochage de la lame 120 et de la vertèbre sur le corps 118, ces embouts étant situés à chacune des extrémités longitudinales du corps 118.

Le corps 118 du balai peut être réalisé en deux parties qui sont disposées sensiblement bout à bout et raccordées l'une à l'autre par un connecteur 126 intermédiaire qui fait partie du système de connexion 116. Ces parties peuvent être indépendantes l'une de l'autre ou liées ensemble par une partie médiane du corps, définie par une découpe médiane partielle 127 du corps, comme cela est visible en figure 10.

Le connecteur 126 est intercalé entre les deux parties du corps 118 et peut comprendre des moyens de liaison à ces parties. Le connecteur 126 peut comprendre des moyens de fixation sur la ou les vertèbres. Il peut ainsi comprendre des griffes inférieures 128 définissant des rainures longitudinales de réception, en général par coulissement, de parties d'extrémité longitudinale de la ou des vertèbres, comme cela est visible en figure 10. Le connecteur 126 est donc configuré pour être solidarisé au balai 112.

Le système de connexion 116 comprend en outre un adaptateur 130 qui est configuré pour être solidarisé au bras 114 et qui est monté sur le connecteur 126 de façon à garder au moins un degré de liberté en pivotement autour d'un axe d'articulation Y qui est un axe transversal sensiblement perpendiculaire à l'axe longitudinal du balai 112. Ce degré de liberté autorise un pivotement du balai 112 vis-à-vis du bras 114 et permet ainsi au balai de suivre la courbure du pare-brise lors de ses déplacements.

Ce degré de liberté est obtenu grâce à des moyens d'articulation de l'adaptateur 130 qui sont configurés pour coopérer avec des moyens complémentaires du connecteur 126, et inversement, pour définir ledit axe d'articulation Y.

Dans l'exemple représenté, les moyens d'articulation comprennent un pion cylindrique 132 qui est porté par l'adaptateur 130 et qui est engagé dans un logement cylindrique 134 du connecteur 126. Le pion cylindrique 132 s'étend dans une direction transversale et définit l'axe Y. Selon une caractéristique de l'invention, le pion 132 est engagé dans le logement 134 par translation le long de l'axe Y, comme cela sera décrit plus en détail dans ce qui suit.

Selon une autre caractéristique de l'invention, les moyens d'articulation sont associés à des moyens de butée qui limitent voire empêchent des déplacements de l'adaptateur 130 vis-à-vis du connecteur 126, le long de l'axe Y, après leur montage.

Dans l'exemple représenté, c'est le pion 132 de l'adaptateur 130 qui porte ces moyens de butée, qui comprennent des moyens 136 en saillie de butée qui sont configurés pour coopérer avec le connecteur pour retenir l'adaptateur vis-à-vis du connecteur 126 en translation le long de l'axe Y.

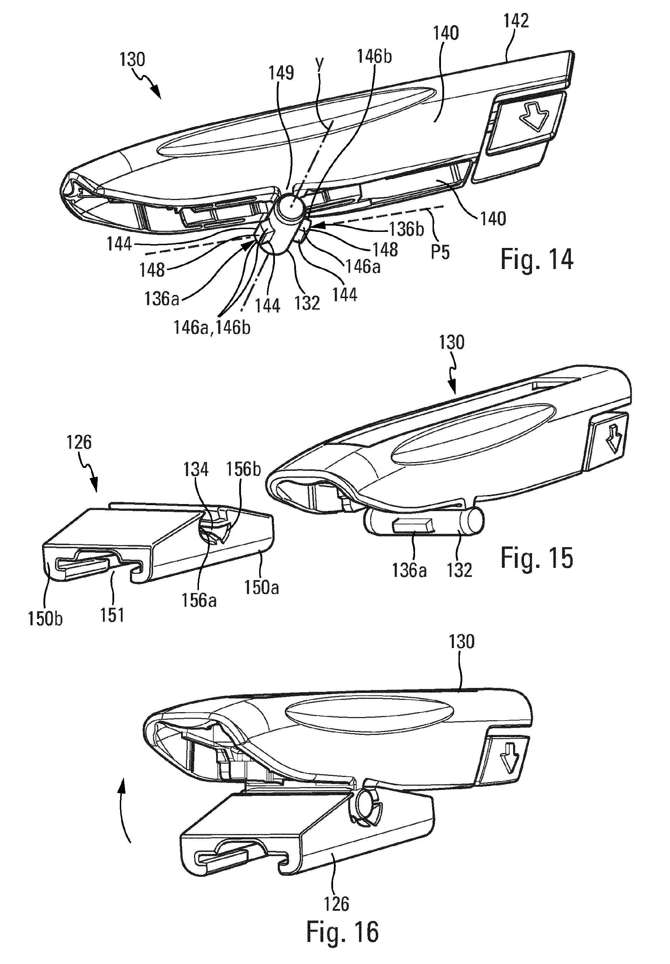

Comme cela est mieux visible en figure 14, l'adaptateur 130 a une forme générale allongée dans la direction longitudinale du balai 112. Il comprend deux parois latérales 140 sensiblement parallèles et à distance l'une de l'autre. Ces parois 140 sont reliées entre elles à leurs extrémités supérieures par une paroi transversale 142 sensiblement perpendiculaire aux parois 140. Les parois 140, 142 ont ici une forme allongée en direction longitudinale.

Le pion 132 porte des ailettes 136a, 136b qui forment les moyens de butée précités. Les ailettes sont ici au nombre de deux. Elles ont chacun une forme rectiligne allongée le long de l'axe Y. Elles sont situées sensiblement au milieu du pion, dans sa direction longitudinale. Elles ont une longueur L1 très inférieure à celle du pion 132 de sorte que leurs extrémités longitudinales soient à distance de celles du pion (figure 10).

Chaque ailette 136a, 136b a une forme générale parallélépipédique et comprend deux faces longitudinales latérales 144, deux faces d'extrémité 146a, 146b et une face longitudinale supérieure 148. Les faces 144 sont sensiblement parallèles. Les faces 146a, 146b sont sensiblement parallèles. Ces faces 146a, 146b sont des faces d'appui, comme cela sera décrit dans le détail dans ce qui suit. Les faces 146a des ailettes s'étendent dans un même plan perpendiculaire à l'axe Y, et leurs faces 146b s'étendent dans un autre même plan perpendiculaire à l'axe Y.

Les ailettes ont des positions et des orientations sensiblement radiales par rapport à l'axe Y. Une première ailette 136a s'étend vers l'avant et vers le bas et une seconde ailette 136 s'étend vers l'arrière et vers le bas. Elles forment entre elles un angle α de l'ordre de 150° environ.

L'adaptateur 130 est ici formé d'une seule pièce avec le pion 132 et ses ailettes 136a, 136b.

Le pion 132 est ici relié au reste de l'adaptateur par un voile de matière 149 qui s'étend le long de l'axe Y. Comme on le voit en figure 14, le pion 132 est situé à l'extrémité inférieure de l'adaptateur 130, le voile 149 s'étendant dans un plan transversal passant par l'axe Y.

Comme on le voit également en figure 14, les ailettes 136a, 136b sont traversées par un plan longitudinal parallèle à l'axe Y et passant par le pion cylindrique 132, par exemple au niveau de son axe Y.

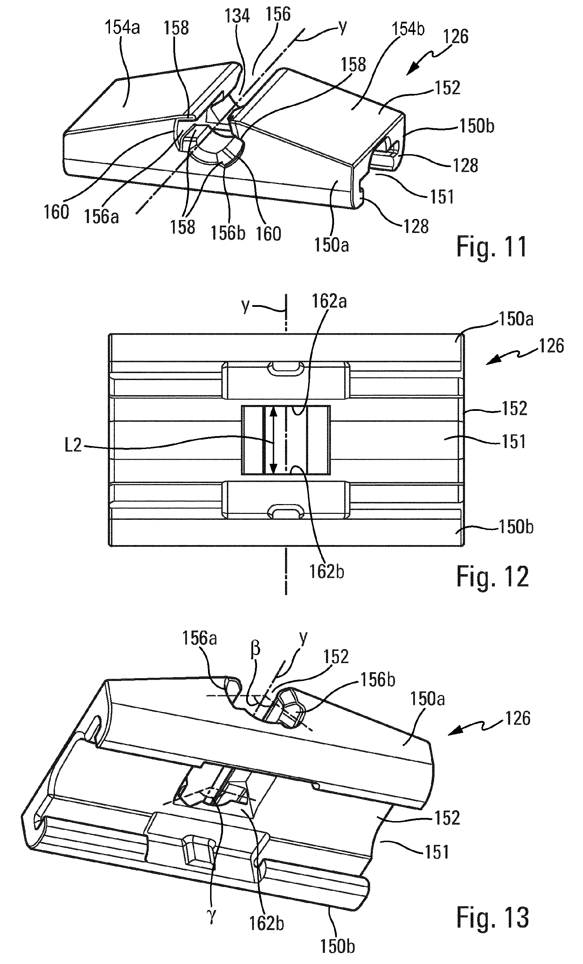

Le connecteur 126, mieux visible aux figures 11 à 13, a une forme générale allongée dans la direction longitudinale du balai 112. Il comprend deux parois latérales 150a, 150b sensiblement parallèles et à distance l'une de l'autre pour définir un espace longitudinal 151 entre elles. Ces parois 150a, 150b sont reliées entre elles à leurs extrémités supérieures par une paroi supérieure 152 sensiblement perpendiculaire aux parois 150a, 150b. Les extrémités inférieures des parois 150a, 150b portent ou forment les griffes 128 précitées. Les parois 150a, 150b, 152 ont ici une forme allongée en direction longitudinale.

La paroi supérieure 152 du connecteur 126 est ici en forme de dièdre et comprend deux faces 154a, 154b planes inclinées, respectivement avant (ou extérieure) et arrière (ou intérieure).

Le logement 134 est ici situé à l'extrémité supérieure du connecteur 126. Le logement 134 s'étend dans la zone de jonction des faces 154a, 154b et débouche au niveau de cette zone. Le logement 134 comprend ainsi une ouverture longitudinale 156 qui s'étend au niveau de la zone de jonction des faces 154a, 154b, ou autrement dit au niveau de l'arête du dièdre.

Le logement 134 s'étend sur toute la dimension transversale du connecteur 126 et traverse l'espace 151 précité.

Les parois 150a, 150b du connecteur 126 comprennent des encoches 156a, 156b de passage des ailettes 136a, 136b.

Les encoches 156a, 156b sont formées dans les parois 150a, 150b, et débouchent dans le logement cylindrique 134. Chaque paroi 150a, 150b comprend une paire d'encoches 156a, 156b. Le connecteur 126 comprend ainsi deux paires d'encoches, soit quatre encoches. Les encoches ne sont pas ici positionnées de manière symétrique par rapport à un plan longitudinal médian P3 du connecteur 126. Le plan P3 est ici sensiblement parallèle aux parois 150a, 150b. Les plans P1 et P3 sont confondus lorsque le connecteur 126 et l'adaptateur 130 sont montés l'un sur l'autre.

Les encoches 156a, 156b sont à distance longitudinale les unes des autres. Chaque paroi 150a, 150b comprend une encoche 156a avant ou extérieure et une encoche 156b arrière ou intérieure. Les encoches d'une même paroi ont des formes et des positions permettant le passage des ailettes 136a, 136b du pion 132.

Chaque encoche 156a, 156b comprend deux faces longitudinales latérales 158 et une face longitudinale de fond 160. Elle ne comprend pas de faces d'extrémité longitudinale puisqu'elle débouche d'une part sur la face externe de la paroi 150a, 150b et sur la face interne de cette paroi, c'est-à-dire dans l'espace 151.

Les faces 158 de l'encoche 156a d'une paroi 150a, 150b ne sont pas (toutes) coplanaires avec les faces 158 de l'encoche 156a de l'autre paroi 150b, 150a.

Les encoches ont des positions et des orientations sensiblement radiales par rapport à l'axe Y du logement 134. Une première encoche 136a de la paroi 150a s'étend vers l'avant et une seconde ailette 136b s'étend vers l'arrière et vers le bas. Elles forment entre elles un angle β de l'ordre de 150° environ, qui est égal à l'angle α précité. Une première encoche 136a de la paroi 150b s'étend vers l'avant et vers le bas et une seconde ailette 136b s'étend vers l'arrière. Elles forment entre elles un angle γ de l'ordre de 150° environ, qui est égal à l'angle α précité. Comme on le voit dans les dessins, les encoches de la paroi 150a sont décalées angulairement autour de l'axe Y par rapport à celles de l'autre paroi 150b. Autrement dit, elles ne sont pas symétriques par rapport au plan P3 comme indiqué dans ce qui précède.

Les encoches ont ici des formes complémentaires de celles des ailettes.

Comme on le voit dans les dessins, les encoches 156a, 156b sont coupées par un plan longitudinal parallèle à l'axe Y et passant par le logement 134, par exemple au niveau de son axe longitudinal.

Le connecteur 126 comprend des faces d'appui et/ou de butée des ailettes 136a, 136b de l'adaptateur 130, qui sont ici formées par les faces latérales internes 162a, 162b des parois 150a, 150b. Autrement dit, les faces d'extrémité 146a, 146b des ailettes sont destinées à coopérer par butée avec les faces internes 162a, 162b des parois 150a, 150b pour limiter voire empêcher les déplacements parasites en translation du connecteur 126 vis-à-vis de l'adaptateur 130, le long de l'axe Y. Les encoches précitées débouchent dans l'espace 151 sur ces faces 162a, 162b.

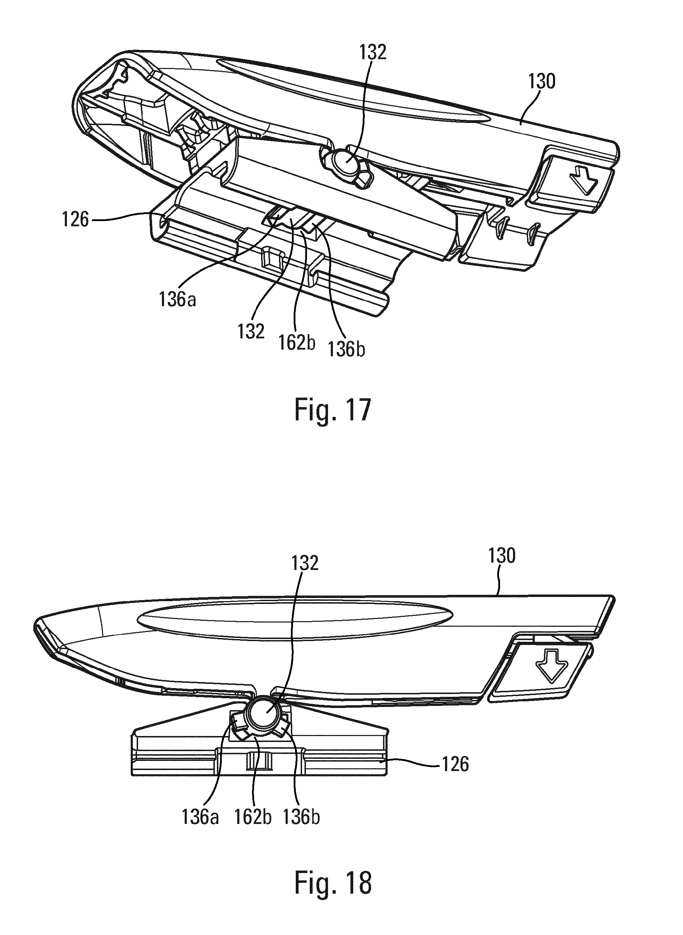

Les faces 162a, 162b sont à une distance L2 l'une de l'autre. Cette distance étant supérieure ou égale à la longueur L1 des ailettes 136a, 136b de façon à ce que ces dernières puissent être accueillies entre ces faces en position de fonctionnement (figures 17-18). Les faces 162a, 162b sont sensiblement parallèles.

Le connecteur 126 est formé d'une seule pièce.

Les figures 15 à 18 représentent des étapes de montage du système de connexion 116 selon l'invention. L'adaptateur 130 est solidarisé au bras 114 et le connecteur 126 est solidarisé au balai 112. Le balai 112 est disposé par rapport au bras 114 de façon à ce que le connecteur 126 soit disposé vis-à-vis de l'adaptateur 130 comme cela est représenté en figure 15. Dans cette position, les axes longitudinaux du pion 132 et du logement 134 sont alignés et les axes longitudinaux de l'adaptateur et du connecteur sont inclinés de façon à ce que les ailettes 136a, 136b soient alignées le long de l'axe Y avec les encoches 156a, 156b (ici de la paroi 150a) à travers lesquelles elles doivent passer. Le connecteur est alors déplacé avec le balai en translation le long de l'axe Y jusqu'à ce que le pion 132 s'engage dans le logement 134 et que les ailettes 136a, 136b traversent les encoches pour venir dans l'espace 151 du connecteur 126, comme cela est visible en figure 16. Les ailettes se trouvent alors entre les faces 162a, 162b du connecteur 126. Les extrémités extérieures de l'adaptateur et du connecteur sont alors rapprochées l'une de l'autre par pivotement selon la flèche de la figure 16, de façon à ce que les ailettes ne soient plus alignées le long de l'axe Y avec les encoches de la paroi 150a (figures 17 et 18). Dans cette position de fonctionnement, les ailettes ne sont pas non plus alignées le long de l'axe Y avec les encoches de l'autre paroi 150b. Les ailettes peuvent alors coopérer par butée avec les faces 162a, 162b pour limiter voire empêcher des déplacements du connecteur vis-à-vis de l'adaptateur, et donc du balai vis-à-vis du connecteur, le long de l'axe Y. Le montage du système de connexion 116 est alors achevé, le connecteur 126 et le balai 112 pouvant pivoter vis-à-vis de l'adaptateur 130 et du bras 114, autour de l'axe Y. Lors de ce pivotement, les ailettes coopèrent par glissement par l'intermédiaire de leurs faces 146a, 146b avec les faces 162a, 162b des empreintes pour guider les déplacements du connecteur vis-à-vis de l'adaptateur. L'opération de montage du système de connexion 116 se fait de préférence en orientant angulairement l'adaptateur 130 dans une position qui ne sera jamais rencontrée lors du fonctionnement du balai 112 sur le véhicule. L'assemblage où le désassemblage du connecteur 126 et de l'adaptateur 130 n'est ainsi pas possible en fonctionnement. On comprend par ailleurs, que le montage de l'adaptateur sur le connecteur peut se faire depuis n'importe quel côté du connecteur.

## Revendications

1. Premier organe (30, 130) pour un système de connexion d'un balai (12, 112) à un bras (14, 114) d'essuie-glace, ce premier organe étant configuré pour être solidarisé audit balai ou audit bras et comportant des moyens d'articulation (32, 132) configurés pour coopérer avec des moyens complémentaires (34, 134) d'un second organe (26, 126) du système de connexion, pour définir un axe (Y) d'articulation du premier organe vis-à-vis de ce second organe, qui est un axe d'articulation dudit balai vis-à-vis dudit bras, ledit premier organe (30, 130) étant **caractérisé en ce qu'**il comprend des premiers moyens (36a, 36b, 136a, 136b) de butée qui sont configurés pour coopérer avec ledit second organe pour retenir ledit premier organe vis-à-vis dudit second organe en translation le long dudit axe d'articulation, dans un premier sens, et des seconds moyens (38a, 136a, 136b) de butée qui sont configurés pour coopérer avec ledit second organe pour retenir le premier organe vis-à-vis dudit second organe en translation le long dudit axe d'articulation, dans un second sens inverse du premier sens.

2. Premier organe (30, 130) selon la revendication 1, dans lequel lesdits moyens d'articulation (32, 132) sont configurés pour être montés sur ou dans lesdits moyens complémentaires (34, 134) par translation axiale le long dudit axe (Y) d'articulation.

3. Premier organe (30, 130) selon la revendication 1 ou 2, ledit premier organe étant un adaptateur configuré pour être solidarisé audit bras (14, 114) ou un connecteur configuré pour être solidarisé audit balai (12, 112).

4. Premier organe (30, 130) selon l'une des revendications précédentes, dans lequel un plan (P5) sensiblement parallèle audit axe d'articulation passe par lesdits moyens d'articulation (32, 132) et par lesdits premiers et seconds moyens de butée (36a, 36b, 38a, 136a, 136b).

5. Premier organe (30, 130) selon la revendication 4, dans lequel ledit premier organe a une forme allongée et en ce que ledit plan (P5) est sensiblement parallèle à un axe d'allongement dudit premier organe.

6. Premier organe (30, 130) selon l'une des revendications précédentes, dans lequel lesdits moyens d'articulation comprennent un pion cylindrique (32, 132).

7. Premier organe (30, 130) selon l'une des revendications précédentes, dans lequel lesdits moyens d'articulation (32, 132) sont situés à une extrémité inférieure dudit premier organe.

8. Premier organe (30, 130) selon l'une des revendications précédentes, dans lequel lesdits moyens d'articulation sont reliés au reste dudit premier organe par un voile de matière (48, 149) s'étendant le long dudit axe d'articulation (Y).

9. Premier organe (30, 130) selon l'une des revendications précédentes, ledit premier organe étant formé d'une seule pièce.

10. Premier organe (30, 130) selon l'une des revendications précédentes, dans lequel lesdits premiers et/ou seconds moyens de butée (36a, 36b, 38a, 136a, 136b) font saillie dudit premier organe.

11. Premier organe (130) selon l'une des revendications précédentes, dans lequel lesdits premiers et seconds moyens de butée (136a, 136b) font saillie desdits moyens d'articulation (132).

12. Premier organe (130) selon la revendication 11, dans lequel les premiers et seconds moyens de butée comprennent au moins une ailette (136a, 136b) faisant saillie desdits moyens d'articulation (132), ladite au moins une ailette s'étendant le long de l'axe d'articulation (Y).

13. Premier organe (30) selon l'une des revendications précédentes, dans lequel lesdits premiers et seconds moyens de butée (36a, 36b, 38a) sont à distance desdits moyens d'articulation (32), et font par exemple saillie des parois latérales (40a, 40b) dudit premier organe.

14. Premier organe (30) selon la revendication 11, dans lequel ledit premier organe comprend une première paroi latérale (40a) qui comprend lesdits premiers moyens de butée faisant saillie (36a, 36b), par exemple au nombre de un ou deux, et une seconde paroi latérale (40b) qui comprend lesdits seconds moyens de butée faisant saillie (38a), par exemple au nombre de un ou deux.

15. Système (16, 116) de connexion d'un balai (12, 112) à un bras (14, 114) d'essuie-glace, ce système comportant deux organes (26, 30, 126, 130) dont un est configuré pour être solidarisé audit balai et l'autre est configuré pour être solidarisé audit bras, **caractérisé en ce qu'**un premier des organes est tel que défini selon l'une des revendications précédentes, et un second des organes comporte des moyens (54a, 54b, 156a, 156b, 162a, 162b) configurés pour coopérer avec lesdits premiers et seconds moyens de butée, par exemple par butée et/ou coopération de formes.

16. Système de connexion (16, 116) selon la revendication 15, dans lequel ledit premier organe est un adaptateur (30, 130) configuré pour être solidarisé audit bras (14, 114) et ledit second organe est un connecteur (26, 126) configuré pour être solidarisé audit balai (12, 112).

17. Balai d'essuie-glace, **caractérisé en ce qu'**il comprend un organe (30, 130) dit premier organe selon l'une des revendications 1 à 14 ou un système (16, 116) de connexion selon la revendication 15 ou 16.
